# EUROPEAN PATENT APPLICATION

(11) **EP 3 079 073 A1**
(43) Date of publication of application: **12.10.2016**
(21) Application number: 15163078.7
(22) Date of filing: 10.04.2015
(51) Int. Cl.: G06F 15/80

(54) **A PARALLEL MACHINE HAVING OPERATIONAL CELLS LOCATED AT NODES OF A FACE CENTERED LATTICE**

(71) Applicant: Politechnika Lodzka, 90-924 Lodz (PL)
(72) Inventor: Jung, Jaroslaw, 94-054 Lodz (PL); Polanowski, Piotr, 93-378 Lodz (PL); Kielbik, Rafal, 95-070 Aleksandrow Lodzki (PL); Halagan, Krzysztof, 90-425 Lodz (PL); Zatorski, Witold, 93-249 Lodz (PL); Ulanski, Jacek, 95-006 Brojce (PL); Napieralski, Andrzej, 95-070 Aleksandrow Lodzki (PL); PAKULA, Tadeusz, deceased (PL)
(74) Representative: Eupatent.pl

(57) **Abstract**

A parallel machine comprising operational cells assigned as nodes of a face centered (FCC) lattice. It comprises: a series of panels (P1-P3) with electronic logical circuits (1-30); wherein each logical circuit is configured to emulate a plurality of operational cells (OC); and wherein the logical circuits (1-30) are physically interconnected with each other such that they form face- and edge-centered square lattices; wherein the topologies of the square lattices are present in planes (p1-p3) oriented in three different directions.

## Description

### TECHNICAL FIELD

The present invention is related to a parallel machine having operational cells located at nodes of a face centered lattice.

### BACKGROUND

Machines configured to perform simultaneous logical operations or mathematical calculations, such as supercomputers or dedicated simulators of processes taking place in multi-element physical systems, are called parallel machines. They use of a high number of microprocessors or other logic circuits, which, located at nodes of a spatial lattice, execute simultaneously a plurality of logical operations. Some of these devices are used to model phenomena of real objects which do not have a granular structure. The precision of simulation depends on the precision of the model. The operational circuits located in the nodes of a spatial lattice communicate with each other to exchange information.

The amount of exchanged information, as well as the quality of representation of physical space, depends on a so-called lattice coordination number. This is a number of the nearest neighboring nodes, with which one node may directly connect.

There are known systems, in which operational cells are located in a cubic lattice, for which the coordination number is 6. There are also known more elaborate systems, such as a Face Centered Cubic (FCC), having the coordination number 12.

It is possible to design logical circuits that may comprise elements corresponding to a plurality of operational cells at lattice nodes and a plurality of such logical circuits can be connected in a single device. The number of such circuits depends on the size of the lattice, namely the number of nodes, and the number of connections between the circuits depends on the coordination number of the lattice.

Design of a device for implementing a lattice with a high number of nodes and a high coordination number, requires consideration of the manner in which electronic circuits may be arranged physically, how to connect them, how to provide cooling of such device, etc.

It seems obvious to arrange the electronic circuits according to the primary architecture of the lattice. Such an arrangement is however not optimal, because the access to the circuits located in the center of the device would be very difficult and it would be difficult to cool and service such a device.

Therefore, there is a need to design an optimized architecture for a device comprising a plurality of logical circuits, which would allow for implementation of operational cells at nodes of a face centered lattice having a coordination number 12.

### SUMMARY

The present invention is related to a parallel machine comprising operational cells assigned as nodes of a face centered lattice. It comprises: a series of panels with electronic logical circuits; wherein each logical circuit is configured to emulate a plurality of operational cells; and wherein the logical circuits are physically interconnected with each other such that they form face- and edge-centered square lattices; wherein the topologies of the square lattices are present in planes oriented in three different directions.

Each logical circuit may belong to three lattices, each of which is oriented in a different plane, wherein one of the planes is parallel to the plane of the panel, on which the logical circuit is arranged.

Each logical circuit may be interconnected, without an intermediation of other logical circuits, with 18 logical circuits.

The electronic logical circuits may be formed by basic circuits and supplementary circuits, wherein the basic circuits are connected in the straight directions of a square lattice with the supplementary circuits and in skewed directions with other basic circuits, wherein the basic circuits differ from the supplementary circuits by the number of active communication lines in the particular directions of physical interconnections between the circuits.

The panels may have their main planes positioned vertically.

The electronic logical circuits can be microprocessors, PLD type circuits, preferably FPGAs or ASICs.

### BRIEF DESCRIPTION OF FIGURES

The object of the invention is shown by means of example embodiments on a drawing, in which:
Fig. 1 presents spatial arrangement of nodes in a face centered lattice having the coordination number 12;
Fig. 2 presents a section of the FCC lattice;
Fig. 3 presents a structure of a reduced cubic lattice RCL;
Fig. 4 presents a difference between a regular plane and a rotated plane;
Fig. 5 presents a logical circuit;
Fig. 6 presents an example of interconnection arrangement and a layout of operational cells positioned at 157 nodes, of an FCC lattice in 9 logical circuits;
Fig. 7A, 7B present a configuration of a basic circuit and a supplementary circuit, respectively;
Fig. 8A, 8B present directions of communication channels for a basic circuit and a supplementary circuit, respectively;
Fig. 9 presents a table of pairs of complementary circuits;
Fig. 10 presents an example of arrangement of 3 sections of planes;
Fig. 11A, 11B present different logical circuits, each comprising 18 operational cells;
Fig. 12 presents an example of a design of a three-dimensional parallel machine according to the invention.

### DETAILED DESCRIPTION

### Spatial arrangement of nodes in a face centered lattice

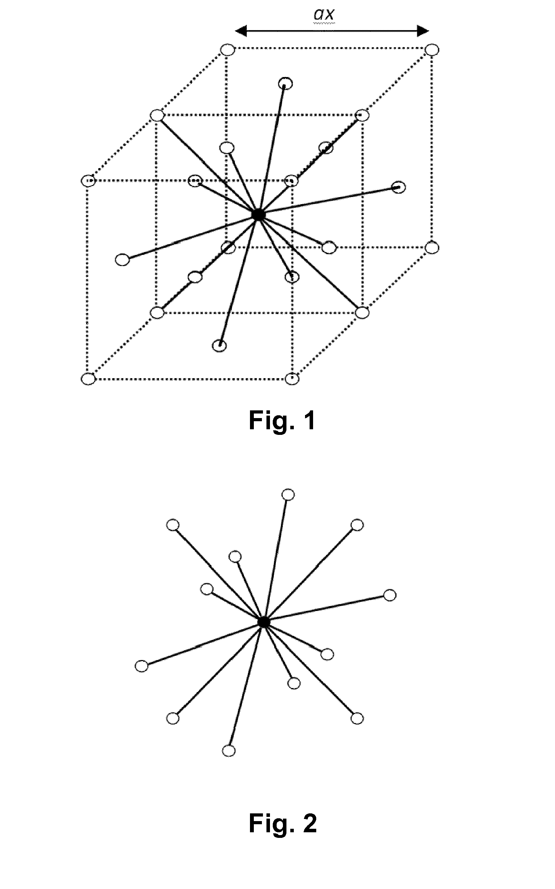

Fig. 1 presents a spatial arrangement of nodes in a face centered lattice having coordination number 12. The nodes of a Face Centered Cubic (FCC) are the points located in the centers of walls and at the corners of cubic modules of a cubic lattice having a side length of *ax.*

At the center of one of the walls of an elementary cell of a cubic lattice (cube), there is located a node, such as the node marked in Fig. 1 by a black dot, which has four neighboring nodes located on the same wall, at its corners and eight nearest neighboring nodes located at the centers of walls of the neighboring cubes. As a result, each node has 12 neighboring, parallel nodes.

After removal of the edges of the cubic lattice and nodes not positioned in the nearest neighborhood of the selected node, the section of the FCC shown in Fig. 2 is obtained.

### Intersection planes of a face centered lattice.

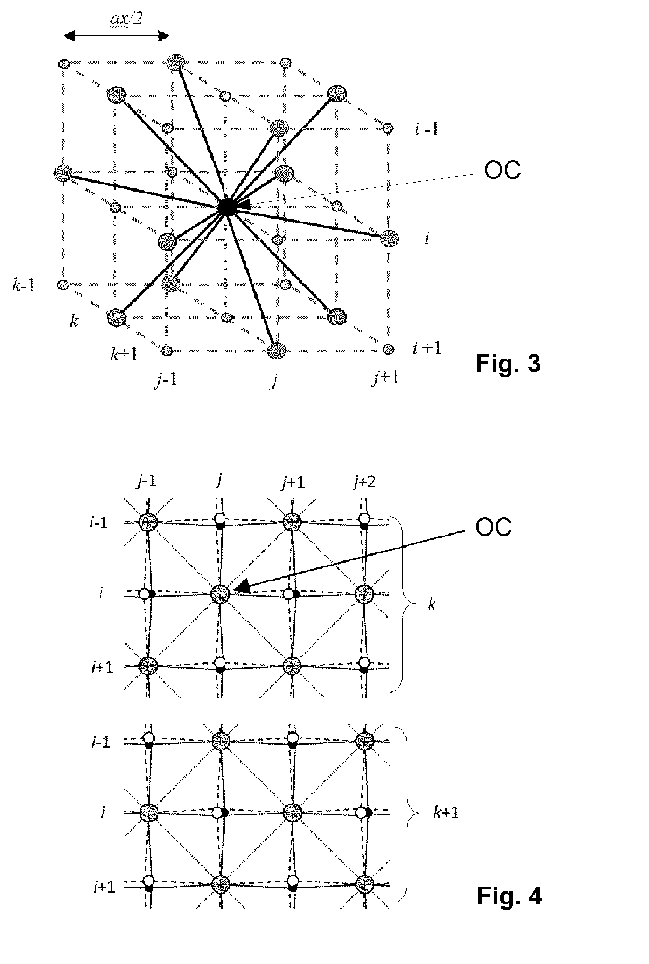

Nodes of an FCC form every other node of a reduced cubic lattice (RCL) having a side length of *ax*/2. Therefore, the FCC can be said to be "immersed" in the RCL, the structure of which is shown in Fig. 3. Indices *i, j, k* denote the location of nodes in the RCL.

An analysis of the section of an FCC shown in Fig. 3 results in a conclusion that there may be distinguished two kinds of parallel planes, positioned alternately with respect to each other, on which there are present nodes of the FCC. The first plane (hereinafter called a regular plane) extends over 5 nodes having the following coordinates: (*i*-1*, j*+1*, k),* (*i*+1*, j*+1*, k),* (*i*+1*, j-1, k),* (*i*-1*, j-1, k)* and *(i, j, k).* The second kind of a plane (hereinafter called a rotated plane) extends over 4 nodes having the following coordinates: (*i, j+1, k-1*)*,* (*i*+1*, j, k-1*)*, (i, j-1, k-1*) and *(i-1, j, k-*1) (the same plane comprises the following points (*i, j*+1*, k*+*1*)*,* (*i*+1*, j, k*+*1*)*, (i, j-1, k+1)* and (*i-1, j, k*+1)).

Fig. 4 presents a difference between a regular plane and a rotated plane. The large, grey points of Fig. 4 denote the nodes of the FCC, in the analyzed regular plane, while the black points denote the nodes in a preceding plane (i.e. "behind the page") whereas the white points are nodes in a following plane (i.e. "in front of the page") (for example, in a regular plane having an index *k*, the black points denote nodes in a rotated plane with index *k*-1, and the white points are nodes in a rotated plane with index *k*+1). The solid black lines denote interconnections of nodes positioned in the analyzed plane and its preceding plane. The grey lines interconnect nodes in the analyzed plane. The black dashed lines connect nodes positioned in the analyzed plane and its following plane.

It follows from Fig. 4 that the rotated plane is a regular plane shifted by one node of the reduced lattice RCL. Hereinafter, a plane in which the first point in the top left corner (*i*=1 and *j*=1) comprises an FCC node, will be called a regular plane. Otherwise, the plane will be called a rotated plane.

### Spatial configuration of operational cells in logical circuits

A parallel machine may utilize microprocessors, PLDs (Programmable Logic Devices) or ASICs (Application Specific Integrated Circuits). These circuits may be configured for implementing cells positioned at the nodes of a FCC lattice, comprising logical systems (hereinafter logical cells). The task of these logical cells is to execute logical operations, the result of which depends on the configuration of the cell (in case PLDs are used, such as FPGAs - Field-programmable Gate Arrays) or on the computer software (in case microprocessors are used) as well as on the signals that appear at their inputs in a particular moment.

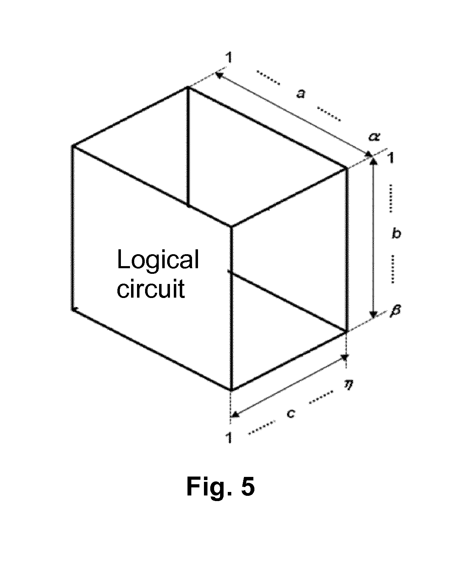

In every logical circuit, there are formed operational cells, having assigned thereto a position corresponding to every other node of the RCL lattice, out of the *α*β*η* nodes (Fig. 5). For an even number of nodes of a lattice, the number of cells comprised in the logical circuit is *α*β*η*/2, and when this number is odd, the number of these cells is equal to *α*β*η*/2-1 or *α*β*η*/2+1.

### An example of an arrangement of interconnection and layout of operational cells positioned at 157 nodes, of an FCC lattice, in 9 logical circuits

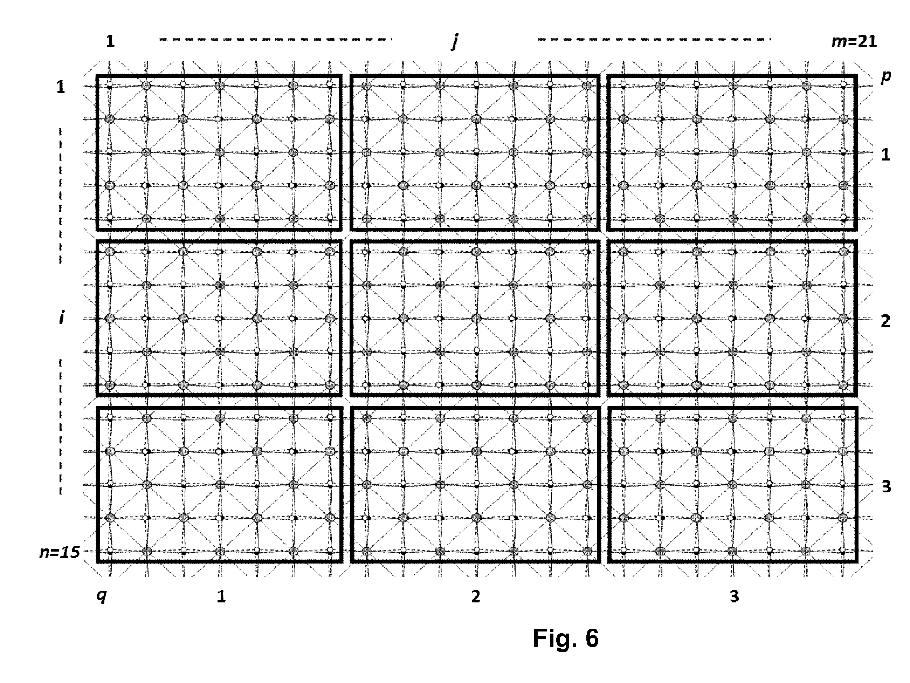

Fig. 6 presents an example of an interconnection arrangement and layout of operational cells positioned at 157 nodes, of an FCC lattice, in 9 logical circuits comprising one layer (*η*=1 see Fig. 5). Fig. 6 presents a rotated plane with operational cells positioned thereon. Indices p and q denote respective logical circuits. The meaning of points and lines is the same as in Fig. 4.

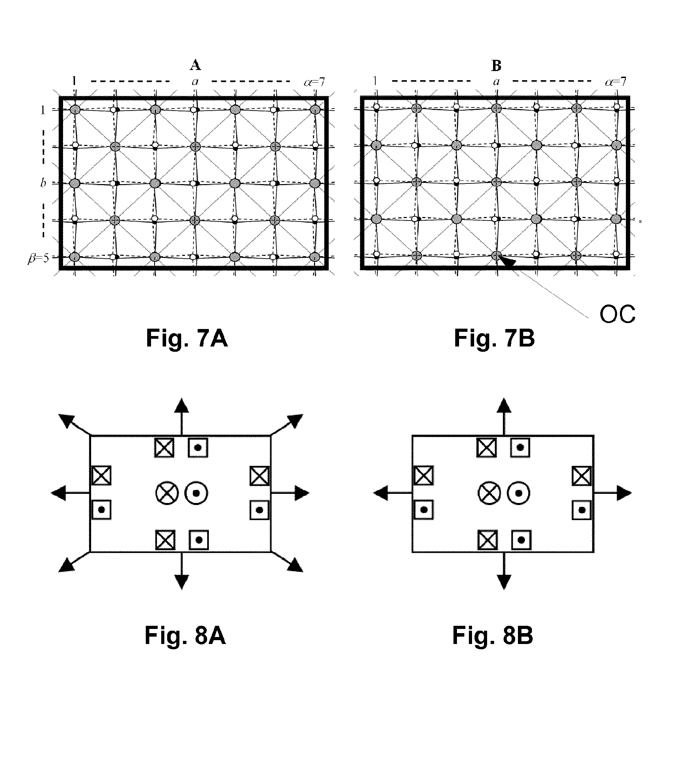

It follows from Fig. 6 that there are two kinds of configurations of logical circuits, which differ by the number of operational cells and directions of data transmission to the neighboring circuits. One configuration type (circuits having indices p,q equal to 1, 2; 2, 1; 2, 3 and 3, 2) includes logical circuits with 18 operational cells (Fig. 7A), in which the lines of communication with other circuits extend in the following directions:
1) 4 lines leftwards (i.e. to a circuit positioned on the left side) and 4 lines rightwards (i.e. to a circuit positioned on the right side);
2) 6 lines downwards (i.e. to a circuit positioned on the bottom side) and 6 lines upwards (i.e. to a circuit positioned on the top side);
3) 58 lines forwards (i.e. to a circuit positioned "in front of the page") and 58 lines backwards (i.e. to a circuit positioned "behind the page");
4) one line in each skewed directions in the plane (towards the corners of the system);
5) 3 lines in a skewed direction forwards and leftwards, 3 lines in a skewed direction backwards and leftwards, 3 lines in a skewed direction forwards and rightwards, 3 lines in a skewed direction backwards and rightwards (for example for a circuit having indices p,q equal 1, 2 to the plane "in front of the page" to circuits having indices p,q equal 1, 1 and 1, 3 as well as to the plane "behind the page" to circuits having the same indices p,q) (3 lines each);
6) 4 lines in a skewed direction forwards and upwards, 4 lines in a skewed direction backwards and upwards, 4 lines in a skewed direction forwards and downwards, 4 lines in a skewed direction backwards and downwards (e.g. for a circuit having indices p,q equal 1, 2 to the plane "in front of the page" to circuits having indices p,q equal 2, 2 and 0, 2 and to the plane "behind the page" to circuits of the same indices p,q) (4 lines each).

The second kind of configuration (circuits having indices p,q equal 1, 1; 1, 3; 2, 2; 3,1 and 3, 3) includes 17 operational cells (Fig. 7B), wherein the communication lines with other circuits extend as follows:
1) 4 lines leftwards (i.e. to a circuit positioned on the left side) and 4 lines rightwards (i.e. to a circuit positioned on the right side);
2) 6 lines upwards and 6 lines downwards;
3) 58 lines forwards (i.e. to a circuit positioned "in front of the page") and 58 lines backwards (i.e. to a circuit positioned "behind the page");
4) there are no lines in skewed directions in the same plane (i.e. towards the corners of the system);
5) 2 lines in a skewed direction forwards and leftwards, 2 lines in a skewed direction backwards and leftwards, 2 lines in a skewed direction forwards and rightwards, 2 lines in a skewed direction backwards and rightwards (for example for a circuit having indices p,q equal 2, 2 to the plane "in front of the page" to circuits having indices p,q equal 2, 1 and 2, 3 as well as to the plane "behind the page" to circuits having the same indices p,q)
6) 3 lines in a skewed direction forwards and upwards, 3 lines in a skewed direction backwards and upwards, 3 lines in a skewed direction forwards and downwards, 3 lines in a skewed direction backwards and downwards (e.g. for a circuit having indices p,q equal 2, 2 to the plane "in front of the page" to circuits having indices p,q equal 1, 2 and 3, 2 and to the plane "behind the page" to circuits of the same indices p,q)

The circuits are alternately positioned on a plane and form a pair called hereinafter a complementary pair, in which the arrangement shown in Fig. 7A is called a basic circuit, and the circuit shown in Fig. 7B is called a supplementary circuit. Inside the area covered by each of the circuits, there *α*β* = 35 nodes of a reduced lattice RCL. The basic circuit (Fig. 7A) comprises 18 operational cells, while the supplementary circuit (Fig. 7B) comprises 17 operational cells.

The signal lines are grouped into communication channels. The directions of the communication channels are shown in Fig. 8A for the basic circuit (shown in Fig. 7A) and Fig. 8B for the supplementary circuit (shown in Fig. 7b). The crossed circles denote a backward direction of a channel ("behind the page") while dotted circles denote a forward direction ("in front of the page"); the crossed squares and dotted squares denote respectively skewed directions backwards and forwards (leftwards, rightwards, upwards and downwards).

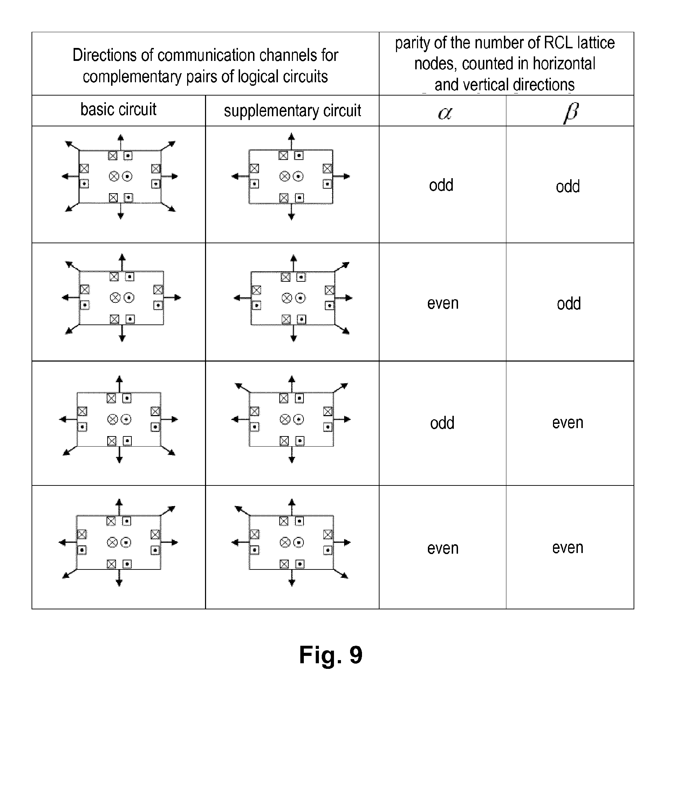

For a regular plane, depending on whether the numbers of rows *β* and columns *α* are even or odd, there may be distinguished 4 pairs of complementary circuits, for which directions of communication channels are shown in Fig. 9.

### An example of interconnection arrangement and layout of operational cells positioned at 157 nodes of an FCC lattice in 9 logical circuits.

If a logical circuit implements one plane having *β* rows and *α* columns, then the number of communication channels depends on the configuration of that circuit. However, if the number of planes is greater than 1, then all circuits have 18 communication channels in directions as shown in Fig. 8A. This difference in the number of communication channels is due to the alternate arrangement of basic configurations and supplementary configurations not only on one plane (see Fig. 6 and 7), but also in regular and rotated planes.

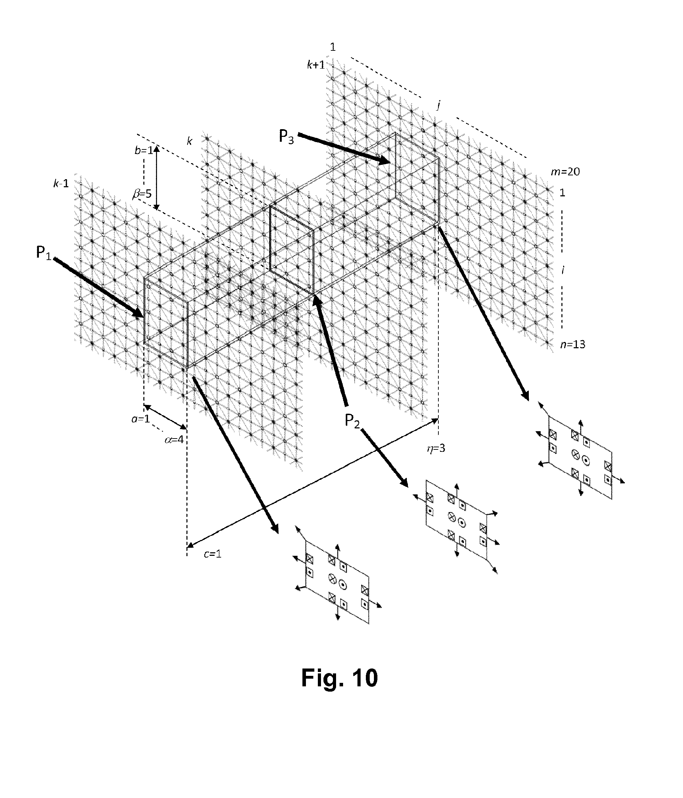

Fig. 10 presents an example of an arrangement of 3 sections of planes: two regular planes and one rotated plane, having dimensions of *α*=4, *β*=5 and *η*=3, covered by an equivalent logical circuit comprising 30 operational cells arranged at the nodes of a reduced lattice RCL.

The planes with indices c=1 and c=3 contain layers P₁ and P₃ of the logical circuit, wherein the communication channels in these planes correspond to the basic circuit for even *α* and odd *β*. On the rotated plane, with index c=2, layer P₂ of the logical circuit is present, in which the communication channels correspond to the supplementary circuit for even *α* and odd *β* (see Fig. 9). As a result of the respective layers being overlaid on each other, logical circuit comprises all possible communication channels shown in Fig. 8A.

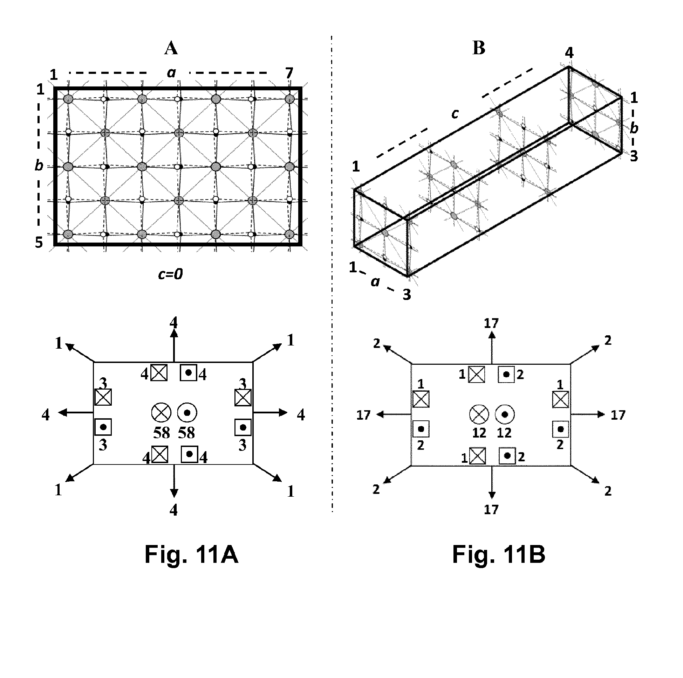

The number of signal lines, in each communication channel, depends on the number of configured operational cells in the logical circuits and on the mutual proportions between the values of *α, β* and *η* defining the number of these cells. For example, for a logical circuit comprising 18 cells in the configuration shown in Fig. 11A (a circuit comprising one regular plane), the number of outputs in the communication channels is different than for a logical circuit comprising the same number of cells, but having the configuration shown in Fig. 11B (a circuit comprising two regular planes and one rotated plane). Below the circuits, there are indicated numbers of signal lines in respective communication channels for both circuits.

### A design of a three-dimensional parallel machine, in which the operational cells are in a face centered lattice, using two-dimensional panels comprising logical circuits positioned at nodes of a face- and edge-centered square lattice.

The design of the machine starts by creating the logical circuits. Therefore, the operational cells must be configured according to their required functionality. Then, the number of cells must be defined, as well as the number of regular and rotated planes to be comprised in the logical circuit. Thereafter, the cells have to be indexed by three indices: a, b and c, each of which denotes the position of a node in the reduced lattice RCL (see Fig. 3, 4 and 5). Next, for cells having indices a, b, c, the following internal connections between the cells in directions Da, Db, Dc have to be made:
Da=a-1,Db=b,Dc=c-1
Da=a-1, Db=b+1, Dc=c
Da=a-1, Db=b, Dc=c+1
Da=a-1, Db=b-1, Dc=c
Da=a, Db=b+1, Dc=c-1
Da=a, Db=b+1, Dc=c+1
Da=a, Db=b-1, Dc=c+1
Da=a, Db=b-1, Dc=c-1
Da=a+1, Db=b, Dc=c-1
Da=a+1, Db=b+1, Dc=c
Da=a+1, Db=b, Dc=c+1
Da=a+1, Db=b-1, Dc=c

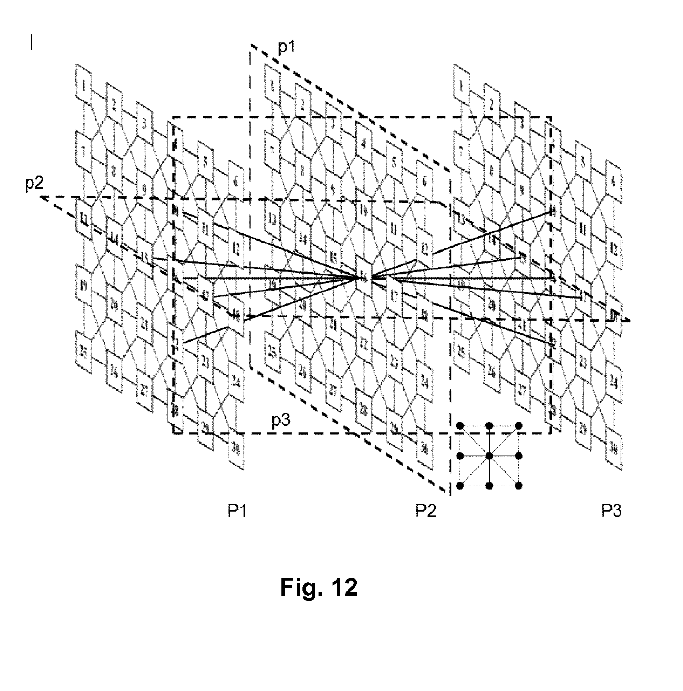

All the connections directed towards the cells, for which one of the directions Da, Db, Dc is lower than 1 or for which one of the following conditions is fulfilled: Da>*α*, Db>*β* or Dc>*η*, form signal lines, which shall be assigned to an appropriate communication channel. The logical circuits formed in this manner allow to design a three-dimensional parallel machine, in which operational cells are in a face centered cube (FCC) lattice. Each of such circuits is positioned on a flat board at the nodes of the square lattice, which is face- and edge-centered (see the insert in Fig. 12).

The directions of internode connections of this lattice are in line with the directions of communication channels shown in Fig. 8A. It follows from the analysis made with reference to description of Fig. 8A, 8B, 9 and 10, that in order to provide appropriate communication for any configuration, each logical circuit should be equipped with communication channels in all 18 directions considered.

Fig. 12 presents a proposal of an example of a machine comprising 90 logical circuits. It is formed of three vertically positioned, flat panels, each comprising 30 logical circuits positioned at the nodes of a square lattice, face- and edge-centered. For clarity of the drawing, only the logical circuit 16 has all communication lines indicated.

The insert at the right, bottom part of the drawing presents an elementary cell of a square lattice, face- and edge-centered. In each circuit, there are configured *α*β*η*/2 (or *α*β*η*/2-1 or *α*β*η*/2+1) operational cells positioned at the nodes of the FCC. The communication channels allow for direct interconnection of the operational cells of neighboring logical circuits (e.g. circuit 16 is connected in the plane with circuits 9, 10, 11, 15, 17, 21, 22 and 23, with circuits having the same number and with circuits 10, 17, 22 and 15 on panels 1 and 3).

It follows from Fig. 12 that the logical circuits are interconnected physically such that they form a plurality of face- and edge-centered, square lattices, whose topologies, in the planes that are oriented in three different directions: planes parallel to the plane of the panel (for example plane p1 parallel to the panel P1), and planes perpendicular to the plane of the panel (for example, the plane p2 crossing, in a horizontal direction, circuits from 13 to 18 and a plane p3 crossing circuits 4,10,16,22 and 28 in a vertical direction).

Therefore, each logical circuit 1-30 of the panel P1 belongs to three face- and edge-centered, square lattices in three planes - for example, circuit 16 belongs to lattices positioned in planes p1, p2 and p3. Therefore, each logical circuit 1-30 has 18 connections with other circuits. The presented assumptions are related to internal circuits, which are not positioned at the edges of panels nor at the outer panels.

In the actual implementation of the invention, all logical circuits are connected to each other physically, so as to form a universal three-dimensional parallel machine, which can be used to implement various FCCs. In order to implement a particular FCC in the parallel machine according to the invention, the individual operational cells of the lattice have to be assigned to the logical circuits, by specifying the parity *αβ* of the number of nodes of the lattice, which are assigned to the individual circuits, and based on this the type of a basic circuit and of the supplementary circuit is selected.

The selected type of complementary pair determines which physical connections are to actually handle communication channels - the activity of physical connections is therefore dependent on the implemented FCC. In the machine according to the invention, these connections are provided between all circuits, so as to enable implementation of any FCC configuration.

The cells at the edges of the panels and at the "outer" walls of panels 1 and 3, due to a spatially-limited structure of the machine, do not have all connections. However, in numerous applications there may be implemented cyclic (or periodic) boundary conditions by connecting the top edges of each panel with its bottom edges by means of corresponding signal lines. This may be similarly applied to the remaining two edges, as well as to the "outer" walls of the panels 1 and 3.

In the machine according to the invention, the circuits are arranged on a series of panels, which greatly facilitates physical construction and servicing of the machine. It is of special advantage when the panels are arranged vertically. In the machine having neighboring, vertical panels, the dissipated power, during operation of the device, is dispersed evenly throughout the whole space. In addition, the vertical arrangement of printed circuit boards results in that the released heat migrates by natural convection (upwards). This facilitates removal of heat from the electronic circuits and thus reduces the cost of cooling systems used.

## Claims

1. A parallel machine comprising operational cells assigned as nodes of a face centered (FCC) lattice, **characterized in that** it comprises:
- a series of panels (P1-P3) with electronic logical circuits (1-30);
- wherein each logical circuit is configured to emulate a plurality of operational cells (OC);
- and wherein the logical circuits (1-30) are physically interconnected with each other such that they form face- and edge-centered square lattices;
- wherein the topologies of the square lattices are present in planes (p1-p3) oriented in three different directions.

2. The parallel machine according to claim 1, **characterized in that** each logical circuit (1-30) belongs to three lattices, each of which is oriented in a different plane (p1-p3), wherein one of the planes (p1) is parallel to the plane of the panel, on which the logical circuit is arranged (1-30).

3. The parallel machine according to claim 1, **characterized in that** each logical circuit (1-30) is interconnected, without an intermediation of other logical circuits (1-30), with 18 logical circuits (1-30).

4. The parallel machine according to claim 1, **characterized in that** the electronic logical circuits (1-30) are formed by basic circuits (A) and supplementary circuits (B), wherein the basic circuits (A) are connected in the straight directions of a square lattice with the supplementary circuits (B) and in skewed directions with other basic circuits (A), wherein the basic circuits (A) differ from the supplementary circuits (B) by the number of active communication lines in the particular directions of physical interconnections between the circuits.

5. The parallel machine according to claim 1, **characterized in that** the panels (P1-P3) have their main planes positioned vertically.

6. The parallel machine according to claim 1, **characterized in that** the electronic logical circuits (1-30) are microprocessors.

7. The parallel machine according to claim 1 **characterized in that** the electronic logical circuits (1-30) are PLD type circuits, preferably FPGAs.

8. The parallel machine according to claim 1, **characterized in that** the electronic logical circuits (1-30) are ASICs.
